# EUROPÄISCHE PATENTSCHRIFT

(11) **EP 1 820 006 B1**
(45) Veröffentlichungstag und Bekanntmachung des Hinweises auf die Patenterteilung: **29.06.2011**
(21) Anmeldenummer: 05811126.1
(22) Anmeldetag: 25.11.2005
(51) Int. Cl.: G01N 27/28, G01N 27/333

(54) **ADAPTER ZUR ELEKTROLYTZUFUHR FÜR EINEN POTENTIOMETRISCHEN SENSOR**
ADAPTER FOR SUPPLYING ELECTROLYTE TO A POTENTIOMETRIC SENSOR
ADAPTATEUR D'ALIMENTATION EN ELECTROLYTE DESTINE A UN CAPTEUR POTENTIOMETRIQUE

(30) Priorität: 06.12.2004 DE 102004058863
(43) Veröffentlichungstag der Anmeldung: 22.08.2007
(73) Patentinhaber: Endress+Hauser Conducta Gesellschaft für Mess- und Regeltechnik mbH & Co. KG, 70839 Gerlingen (DE)
(72) Erfinder: AUERSWALD, Lothar, 04720 Döbeln (DE); FANSELOW, Christian, 09306 Erlau (DE)
(74) Vertreter: Andres, Angelika Maria
(86) Internationale Anmeldenummer: PCT/EP2005/056219
(87) Internationale Veröffentlichungsnummer: WO 2006/061327

(56) Entgegenhaltungen:
- EP-A- 0 279 541
- DE-A1- 3 118 447
- DE-A1- 10 137 115
- US-A1- 2004 194 563
- JUMO: "Datasheet 20.2900" JUMO MEASUREMENT AND CONTROL, [Online] August 1998 (1998-08), Seiten 1-21, XP002363597 Gefunden im Internet: URL:http://www.jumo.co.uk/analytical/image s/t20.2900gb.pdf> [gefunden am 2006-01-18]

## Beschreibung

Die vorliegende Erfindung betrifft Sensoren, die eine flüssige Substanz als Referenz- oder als Kalibrierlösung benötigen. Zu diesen Sensoren gehören beispielsweise potentiometrische Sensoren, insbesondere pH-Sensoren oder Redox-Sensoren, an deren Beispiel die Erfindung nachfolgend erläutert wird, ohne darauf beschränkt zu sein.

Potentiometrische Sensoren messen gewöhnlich die Potentialdifferenz zwischen einer Arbeitselektrode und einer Referenzelektrode, wobei die Arbeitselektrode in einer Pufferlösung angeordnet ist, welche durch eine Glasmembran von dem zu untersuchenden Medium getrennt ist. Die Referenzelektrode ist in einem Referenzelektrolyten, bei einem pH-Sensor beispielsweise einer 3,5 molaren KCL-Lösung angeordnet.

Um eine gleichbleibende Qualität der Messung zu gewährleisten, ist zu gegebener Zeit der Referenzelektrolyt zu erneuern. Zu diesem Zweck weisen pH- bzw. Redox-Sensoren gewöhnlich auf ihrer Mantelfläche eine Nachfüllöffnung auf. Das Nachfüllen des Referenzelektrolyten erweist sich als umständlich, insofern als Bedienpersonal jeden Sensor individuell aufsuchen muß, um eine Befüllung durch die Nachfüllöffnung vorzunehmen. Um diesen Vorgang zu erleichtern, sind pH-Sensoren erhältlich, die einen Schlauchanschluss aufweisen, über den der Referenzelektrolyt aus einem Reservoir nachfließen kann. Der Schlauchanschluss kann beispielsweise eine so genannte Schlaucholive aus Glas um die Nachfüllöffnung oder in einen Sensorkopf integriert sein. Gleichermaßen ist von der Firma Jumo ein so genannter Überdruckaufsatz erhältlich, der einen Schlauchanschluss für den Referenzelektrolyten aufweist.

Sämtliche der beschriebenen Sensoren werden bestimmungsgemäß mittels eines Gewindes in eine Prozessöffnung eingeschraubt wobei durch das Einschrauben ein Dichtring zwischen Dichtflächen am Sensor und an der Prozessöffnung eingespannt wird. Damit ist jedoch insofern ein Sicherheitsrisiko verbunden, als ein Verdrehen des Schlauchanschlusses bezüglich der Prozessöffnung, beispielsweise um den Schlauchanschluss auszurichten, ein Versagen der Prozessdichtung führen kann.

Zudem weist der Überdruckaufsatz der Firma Jumo den folgenden Sicherheitsmangel auf. Ein Dichtring, welcher den Pfad der Referenzflüssigkeitszufuhr gegen den Schaft des Sensors außerhalb des Pfades abdichtet wird mittels einer Einschraubhülse in seinen Dichtungssitz und gegen den Sensorschaft gepresst, wobei die Einschraubhülse an beiden Enden ein Gewinde trägt. Das erste Gewinde dient dazu, die Einschraubhülse in den Sensorkopf zu schrauben und den Dichtring in der Beschriebenen Weise einzupressen. Das zweite Gewinde dient als Prozessanschlussgewinde, um den Sensor in einen Prozessanschluss zu schrauben. Ein Verdrehen des Sensorkopfes gefährdet in diesem Fall also also zwei Dichtungen nämlich erstens die Prozessdichtung und zweitens die Dichtung der Referenzflüssigkeitszufuhr. Im Extremfall kann bei einem Ausfall beider Dichtungen Referenzflüssigkeit in das zu untersuchende Prozessmedium gelangen.

Der vorliegenden Erfindung liegt daher die Aufgabe zugrunde, einen potentiometrischen Sensor mit einem Elektrolytanschluss sowie ein Adapter mit einem Elektrolytanschluss für potentiometrische Sensoren bereitzustellen, welche die Nachteile des Stands der Technik überwinden.

Die Aufgabe wird erfindungsgemäß gelöst durch einen Adapter gemäß des unabhängigen Patentanspruchs 1 und den potentiometrischen Sensor gemäß des unabhängigen Patentanspruchs 11.

Der erfindungsgemäße Adapter für einen potentiometrischen Sensor mit einem axialsymmetrischen Sensorschaft, der in seiner Mantelfläche eine Referenzflüssigkeitsöffnung aufweist, umfasst einen Ringkammerkörper mit
einer axialsymmetrischen Sensoröffnung zur Aufnahme des Sensorschafts in einer vorgegebenen axialen Position bezüglich des Ringkammerkörpers, wobei
die Sensoröffnung einen ersten ringförmigen Dichtungssitz in einem ersten axialen Abschnitt und einen zweiten ringförmigen Dichtungssitz in einem zweiten axialen Abschnitt aufweist,
zwischen dem ersten Dichtungssitz und dem Sensorschaft und zwischen dem zweiten Dichtungssitz und dem Sensorschaft ein erster und ein zweiter Dichtring eingespannt werden können,
die axiale Position der Referenzflüssigkeitsöffnung zwischen dem ersten und dem zweiten axialen Abschnitt liegt, wenn der Sensorschaft bestimmungsgemäß in dem Adapter aufgenommen ist, so dass zwischen dem ersten und dem zweiten Dichtring und der Mantelfläche des Sensorschafts eine Ringkammer ausgebildet ist, die mit der Referenzflüssigkeitsöffnung kommuniziert, und
der Ringkammerkörper ferner einen Kanal aufweist, der sich zwischen der Ringkammer und einer Referenzzufuhröffnung erstreckt, dadurch gekennzeichnet dass
der Adapter ferner einen Prozessanschlusskörper aufweist mit einer Prozessanschlussöffnung, welche den Sensorschaft umgibt, und deren Achse mit der Achse der Sensoröffnung fluchtet, wobei die axiale Position des Prozessanschlusskörpers bezüglich des Ringkammerkörpers fixiert ist, und der Prozessanschlusskörper bezüglich des Ringkammerkörpers frei drehbar ist.

Der erste Dichtungssitz kann beispielsweise eine erste Dichtfläche für einen Dichtring umfassen, die an einen ersten Endabschnitt der Sensoröffnung angrenzt und diesem zugewandt ist. In dem ersten Endabschnitt der Sensoröffnung kann ein Gewinde vorgesehen sein, in welches ein komplementäres Gewinde, welches beispielsweise an einem Sensorkopf des potentiometrischen Sensors vorgesehen ist, eingeschraubt werden kann. Gewöhnlich weist der Sensorkopf einen größeren Durchmesser auf als der Sensorschaft, so dass zwischen diesen eine radiale Stufe ausgebildet ist, die als eine sensorkopfseitige Anschlagfläche dient. Die Anschlagfläche kann entweder selbst als eine erste Einspannfläche dienen, mit welcher der erste Dichtring gegen die erste Dichtfläche gedrückt wird, oder sie kann einen ersten Zwischenring axial abstützen, welcher die erste Einspannfläche aufweist.

Das Gewinde am Sensorkopf kann entweder starr mit dem Sensorkopf verbunden oder auf einer Hülse ausgebildet sein, die bezüglich des Sensorkopfes verdrehbar ist.

Der zweite Dichtungssitz kann beispielsweise eine zweite Dichtfläche für einen Dichtring umfassen, die an einen zweiten Endabschnitt der Sensoröffnung angrenzt und diesem zugewandt ist, wobei der zweite Endabschnitt dem ersten Endabschnitt abgewandt ist. In dem zweiten Endabschnitt der Sensoröffnung kann ein Gewinde vorgesehen sein, in welches eine Schraubhülse eingeschraubt werden kann. Die Stirnfläche der Schraubhülse kann entweder selbst als eine zweite Einspannfläche dienen, mit welcher der zweite Dichtring gegen die zweite Dichtfläche gedrückt wird, oder sie kann einen zweiten Zwischenring axial abstützen, welcher die zweite Einspannfläche aufweist.

Um eine Einleitung von unerwünschten Drehmomenten in die Einschraubhülse zum Einpannen des zweiten Dichtrings zu verhindern, weist die Einschraubhülse vorzugsweise keinerlei Kraftschluss zum Prozessanschlusskörper, bzw. zur Prozessdichtung auf. D.h. der Prozessanschlusskörper und die Einschraubhülse sind getrennte Bauteile, es gibt keinen Reibschluss oder Formschluss zwischen der Einschraubhülse und dem Prozessanschlusskörper, und die Prozessdichtung stützt sich nicht auf der Einsschraubhülse ab.

Der erste und/oder zweite Dichtring können jeweils im Nebenschluss und/oder Hauptschluss eingespannt sein. Die Einspannung im Nebenschluss bewirkt in jedem Fall einen geometrisch genau definierten Grad der Einspannung des Dichtrings. Bei der Einspannung im Hauptschluss kann die Einspannkraft dagegen einfacher maximiert werden, sofern dieses gewünscht ist.

Die Mantelfläche des Sensorschafts dient ebenfalls als Dichtfläche für den eingespannten ersten und zweiten Dichtring, um eine vollständige Abdichtung der Ringkammer zu bewirken.

Der erste und/oder zweite Dichtungssitz können in einer alternativen Ausgestaltung des erfindungsgemäßen Adapters, jeweils eine umlaufende Ringnut in der Sensoröffnung umfassen, welche so bemessen ist, dass ein Dichtring zwischen dem Sensorschaft und der Ringnut in einem solchen Maße eingespannt ist, dass die resultierende Flächenpressung des Dichtrings eine zuverlässige Dichtung bewirkt.

Der Prozessanschlusskörper kann beispielsweise eine den Sensorschaft umschließende Hülse umfassen, welche den Ringkammerkörper zumindest in einem axialen Abschnitt umschließt, oder welche in einem axialen Abschnitt von dem Ringkammerkörper umschlossen wird, und welche mit geeigneten Rastmitteln gegen axiale Verschiebung bezüglich des Ringkammerkörpers gesichert ist.

Die Hülse kann auf Ihrer Mantelfläche ein Gewinde oder einen Teil eines Bajonettverschlusses aufweisen um eine Montage in einer dazu komplementär gestalteten Prozessöffnung zu ermöglichen.

Gleichermaßen kann die Hülse einen Flansch aufweisen, an einem geeigneten Gegenflansch befestigt werden kann.

Eine dem Prozess zugewandte Stirnfläche der Hülse oder des Ringkammerkörpers kann zugleich als Einspannfläche für eine Prozessdichtung dienen, wobei die Dichtwirkung der eingespannten Prozessdichtung vorzugsweise zwischen einer Anschlagfläche der Prozessöffnung und der Mantelfläche des Sensors bewirkt werden kann.

Die Referenzzufuhröffnung kann beispielsweise in eine Anschluss für eine Referenzflüssigkeitsleitung münden, beispielsweise einen Schlauchanschluss.

Der potentiometrische Sensor kann beispielsweise einen pH-Sensor oder einen Redox-Sensor, insbesondere eine so genannte Einstabmesskette aufweisen. Der Sensorschaft umfasst beispielsweise Glas, ein Metall oder einen Kunststoff, beispielsweise PEEK.

Der Ringkammerkörper kann prinzipiell beliebige Werkstoffe aufweisen, wobei derzeit Kunststoff, insbesondere PEEK bevorzugt ist.

Der erfindungsgemäße potentiometrische Sensor umfasst:
einen axialsymmetrischen Sensorschaft, der in seiner Mantelfläche eine Referenzflüssigkeitsöffnung aufweist,
einen Ringkammerkörper mit
einer axialsymmetrischen Sensoröffnung in welche der Sensorschaft in einer vorgegebenen axialen Position bezüglich des Ringkammerkörpers aufgenommen ist, wobei
die Sensoröffnung eine erste ringförmige Dichtung zum Sensorschaft in einem ersten axialen Abschnitt und eine zweite ringförmige Dichtung zum Sensorschaft in einem zweiten axialen Abschnitt aufweist,
die axiale Position der Referenzflüssigkeitsöffnung zwischen dem ersten und dem zweiten axialen Abschnitt liegt, wenn der Sensorschaft bestimmungsgemäß in dem Adapter aufgenommen ist, so dass zwischen der ersten und der zweiten Dichtung und der Mantelfläche des Sensorschafts eine Ringkammer ausgebildet ist, die mit der Referenzflüssigkeitsöffnung kommuniziert, und
der Ringkammerkörper ferner einen Kanal aufweist, der sich zwischen der Ringkammer und einer Referenzzufuhröffnung erstreckt, dadurch gekennzeichnet dass
der Sensor ferner einen Prozessanschlusskörper aufweist mit einer Prozessanschlussöffnung, welche den Sensorschaft umgibt, und deren Achse mit der Achse der Sensoröffnung fluchtet, wobei die axiale Position des Prozessanschlusskörpers bezüglich des Ringkammerkörpers fixiert ist, und der Prozessanschlusskörper bezüglich des Ringkammerkörpers frei drehbar ist.

Die Erfindung wird nun anhand des in den Zeichnungen dargestellten Ausführungsbeispiels erläutert. Es zeigt:
Fig. 1: einen Längsschnitt durch ein erstes Ausführungsbeispiel eines erfindungsgemäßen Adapters; und
Fig. 2: einen Längsschnitt durch ein zweites Ausführungsbeispiel eines erfindungsgemäßen Adapters.

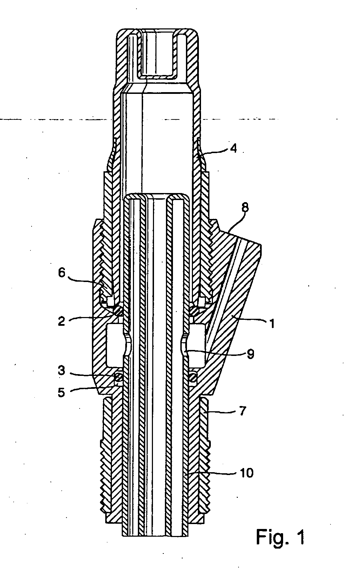

Der in Fig. 1 dargestellte erfindungsgemäße Adapter umfasst einen Ringkammerkörper 1 mit einer zylindrischen Sensoröffnung in welche ein Sensorschaft 10 eines pH-Sensors in eine vorgegebene axialen Position eingeschoben ist. Die axiale Position ist durch einen Sensorkopf 4 des pH-Sensors, definiert, welcher fest mit dem Sensorschaft 10 verbunden ist, wobei der Sensorkopf 4 eine Gewindehülse 6 trägt, die in ein Gewinde in einem ersten Endabschnitt der Sensoröffnung eingeschraubt ist

Die Sensoröffnung weist einen ersten ringförmigen Dichtungssitz 2 mit einer konkaven, trichterförmigen Dichtungsfläche in einem ersten axialen Abschnitt auf, der an den ersten Endabschnitt angrenzt. Eine ringförmige Stirnfläche des Sensorkopfes, welche den Sensorschaft umgibt, dient als eine erste, Einspannfläche mit welcher ein erster Dichtring gegen die trichterförmige Dichtungsfläche und aufgrund der resultierenden Radialkomponente der Normalkraft gegen die trichterförmige Dichtungsfläche gegen den Sensorschaft gedrückt wird.

Ein zweiter Dichtungssitz in einem zweiten axialen Abschnitt der Sensoröffnung umfasst eine umlaufende Ringnut 5, in welcher ein Dichtring3 eingesetzt ist, der zwischen dem Boden der Ringnut 5 und der Mantelfläche des Sensorschafts eingespannt ist.

Auf diese Weise ist zwischen dem ersten und dem zweiten Dichtring einerseits sowie zwischen der Mantelfläche des Sensorschafts und der Wand der Sensoröffnung eine Ringkammer ausgebildet, in welche einerseits eine Referenzflüssigkeitsöffnung 9 im Sensorschaft 10 und ein Kanal 8 mündet, der sich durch den Ringkammerkörper 1 zu einem Referenzflüssigkeitsleitungsanschluss erstreckt. Der Referenzflüssigkeitsleitungsanschluss ist hier nicht im Detail dargestellt.

Der Ringkammerkörper 1 ist in seinem zweiten Endabschnitt von einer zylindrischen Gewindehülse 7 umgeben, die als Prozessanschlusskörper zum Einschrauben in eine Prozessöffnung dient. Die Gewindehülse 7 ist bezüglich des Ringkammerkörpers 1 frei verdrehbar und durch einen radialen Vorsprung am zweiten Ende des Ringkammerkörpers 1 gegen axiale Verschiebung bezüglich des Ringkammerkörpers 1 gesichert. Die ringförmige Stirnfläche des Ringkammerkörpers 1 an dessen zweiten Ende, welche den Sensorschaft umschließt, dient zugleich als Einspannfläche für eine Prozessdichtung.

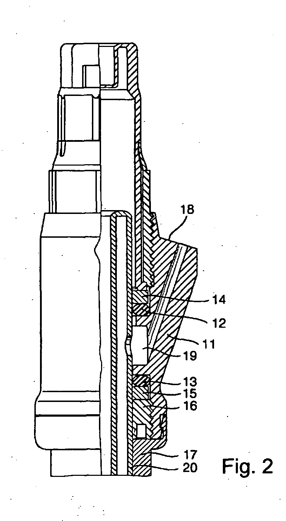

Der in Fig. 2 dargestellte erfindungsgemäße Adapter umfasst einen Ringkammerkörper 11 mit einer zylindrischen Sensoröffnung in welche ein Sensorschaft 20 eines pH-Sensors in eine vorgegebene axialen Position eingeschoben ist. Die axiale Position ist durch einen Sensorkopf des pH-Sensors, definiert, welcher fest mit dem Sensorschaft 10 verbunden ist, wobei der Sensorkopf 4 eine Gewinde aufweist, welches in einen ersten Endabschnitt der Sensoröffnung eingeschraubt ist

Die Sensoröffnung weist einen ersten ringförmigen Dichtungssitz 12 mit einer konkaven, kugelschalenförmigen Dichtungsfläche in einem ersten axialen Abschnitt auf, der an den ersten Endabschnitt angrenzt. Ein erster Einspannring 14, welcher an der ringförmigen Stirnfläche des Sensorkopfes anliegt, den Sensorschaft umgibt und bezüglich des Sensors frei drehbar ist, weist eine erste Einspannfläche auf, mit welcher ein erster Dichtring gegen die kugelschalenförmige Dichtungsfläche und aufgrund einer resultierenden Radialkomponente der Normalkraft gegen die Dichtungsfläche gegen den Sensorschaft 20 gedrückt wird.

Ein zweiter Dichtungssitz 13 umfasst eine zweite kugelschalenförmige Dichtfläche für einen Dichtring, die an einen zweiten Endabschnitt der Sensoröffnung angrenzt und diesem zugewandt ist, wobei der zweite Endabschnitt dem ersten Endabschnitt abgewandt ist. In dem zweiten Endabschnitt der Sensoröffnung ist ein Gewinde vorgesehen in welches eine Schraubhülse 16 eingeschraubt ist. Die Stirnfläche der Schraubhülse stützt einen zweiten Einspannring 15 axial ab, welcher eine zweite Einspannfläche aufweist, mit welcher ein zweiter Dichtring entsprechend gegen die zweite Dichtungsfläche und gegen die Mantelfläche des Sensorschafts 20 gedrückt wird.

Auf diese Weise ist zwischen dem ersten und dem zweiten Dichtring einerseits sowie zwischen der Mantelfläche des Sensorschafts 20 und der Wand der Sensoröffnung eine Ringkammer ausgebildet, in welche einerseits eine Referenzflüssigkeitsöffnung 19 im Sensorschaft 20 und ein Kanal mündet, der sich durch den Ringkammerkörper 1 zu einem Referenzflüssigkeitsleitungsanschluss 18 erstreckt.

Der Ringkammerkörper 11 ist in seinem zweiten Endabschnitt von einer zylindrischen Gewindehülse 17 umgeben, die als Prozessanschlusskörper zum Einschrauben in eine Prozessöffnung dient. Die Gewindehülse 17 ist bezüglich des Ringkammerkörpers 11 frei verdrehbar und durch einen radialen Vorsprung am zweiten Ende des Ringkammerkörpers 1 gegen axiale Verschiebung bezüglich des Ringkammerkörpers 1 gesichert. Die ringförmige Stirnfläche der Gewindehülse 17 welche den Sensorschaft 20 umschließt, dient als Einspannfläche für eine Prozessdichtung.

## Patentansprüche

1. Adapter für einen potentiometrischen Sensor mit einem axialsymmetrischen Sensorschaft, der in seiner Mantelfläche eine Referenzflüssigkeitsöffnung (9;19) aufweist, wobei der Adapter umfasst: einen Ringkammerkörper (1; 11) mit einer axialsymmetrischen Sensoröffnung zur Aufnahme des Sensorschafts (10; 20) in einer vorgegebenen axialen Position bezüglich des Ringkammerkörpers (1;11), wobei die Sensoröffnung einen ersten ringförmigen Dichtungssitz (2;12) in einem ersten axialen Abschnitt und einen zweiten ringförmigen Dichtungssitz (3;13) in einem zweiten axialen Abschnitt aufweist, zwischen dem ersten Dichtungssitz und dem Sensorschaft und zwischen dem zweiten Dichtungssitz und dem Sensorschaft ein erster und ein zweiter Dichtring eingespannt werden können, die axiale Position der Referenzflüssigkeitsöffnung (9; 19) zwischen dem ersten und dem zweiten axialen Abschnitt liegt, wenn der Sensorschaft bestimmungsgemäß in der Sensoröffnung aufgenommen ist, so dass zwischen dem ersten und dem zweiten Dichtring und der Mantelfläche des Sensorschafts (10; 20) eine Ringkammer ausgebildet ist, die mit der Referenzflüssigkeitsöffnung (9; 19) kommuniziert, und der Ringkammerkörper ferner einen Kanal (8; 18) aufweist, der sich zwischen der Ringkammer und einer Referenzzufuhröffnung erstreckt, **dadurch gekennzeichnet dass** der Adapter ferner einen Prozessanschlusskörper (7; 17) aufweist mit einer Prozessanschlussöffnung, welche den Sensorschaft (10; 20) umgibt, und deren Achse mit der Achse der Sensoröffnung fluchtet, wobei die axiale Position des Prozessanschlusskörpers (7; 17) bezüglich des Ringkammerkörpers (1; 11) fixiert ist, und der Prozessanschlusskörper bezüglich des Ringkammerkörpers frei drehbar ist.

2. Adapter nach Anspruch 1, wobei der erste Dichtungssitz eine erste Dichtfläche für einen Dichtring umfasst, die an einen ersten Endabschnitt der Sensoröffnung angrenzt und diesem zugewandt ist.

3. Adapter nach Anspruch 2, wobei in dem ersten Endabschnitt der Sensoröffnung ein Gewinde vorgesehen ist, in welches ein komplementäres Gewinde, welches an einem Sensorkopf des potentiometrischen Sensors vorgesehen ist, eingeschraubt werden kann, wobei eine ringförmige Stirnfläche des Sensorkopfs direkt oder über einen zwischengelagerten ersten Einspannring die Einspannung eines Dichtrings gegen die erste Dichtfläche bewirkt.

4. Adapter nach einem der Ansprüche 1 bis 3, wobei der zweite Dichtungssitz eine zweite Dichtfläche für einen Dichtring umfasst, die an einen zweiten Endabschnitt der Sensoröffnung angrenzt und diesem zugewandt ist, wobei der zweite Endabschnitt dem ersten Endabschnitt abgewandt ist.

5. Adapter nach Anspruch 4, wobei in dem zweiten Endabschnitt der Sensoröffnung ein Gewinde vorgesehen ist in welches eine Schraubhülse eingeschraubt werden kann, um einen Dichtring gegen die zweite Dichtfläche direkt oder mittels eines zwischengelagerten zweiten Einspannrings einzuspannen.

6. Adapter nach einem der vorhergehenden Ansprüche, wobei die Mantelfläche des Sensorschafts (10;20) ebenfalls als Dichtfläche für den eingespannten ersten und zweiten Dichtring dient, um eine vollständige Abdichtung der Ringkammer zu bewirken.

7. Adapter nach Anspruch 1, wobei der erste und/oder zweite Dichtungssitz jeweils eine umlaufende Ringnut in der Sensoröffnung umfassen, welche so bemessen ist, dass ein Dichtring zwischen dem Sensorschaft und der Ringnut in einem solchen Maße eingespannt ist, dass die resultierende Flächenpressung des Dichtrings eine zuverlässige Dichtung bewirkt.

8. Adapter nach einem der vorhergehenden Ansprüche, wobei der Prozessanschlusskörper eine den Sensorschaft umschließende Hülse umfasst, welche den Ringkammerkörper zumindest in einem axialen Abschnitt umschließt, oder welche in einem axialen Abschnitt von dem Ringkammerkörper umschlossen wird, und welche mit geeigneten Rastmitteln gegen axiale Verschiebung bezüglich des Ringkammerkörpers gesichert ist.

9. Adapter nach Anspruch 8, wobei die Hülse auf Ihrer Mantelfläche ein Gewinde oder einen Teil eines Bajonettverschlusses trägt oder stirnseitig einen Flansch aufweist.

10. Adapter nach Anspruch 8 oder 9, wobei eine einer Prozessöffnung zugewandte Stirnfläche der Hülse oder des Ringkammerkörpers als Einspannfläche für eine Prozessdichtung dient.

11. Potentiometrischer Sensor, umfassend: einen axialsymmetrischen Sensorschaft, der in seiner Mantelfläche eine Referenzflüssigkeitsöffnung aufweist und einen Adapter nach einem der Ansprüche 1-10, wobei die axiale Position der Referenzflüssigkeitsöffnung zwischen dem ersten und dem zweiten axialen Abschnitt des Adapters liegt, wenn der Sensorschaft bestimmungsgemäß in dem Adapter aufgenommen ist, und wobei zwischen dem ersten Dichtungssitz und dem Sensorschaft ein erster Dichtring als erste ringförmige Dichtung zum Sensorschaft und zwischen dem zweiten Dichtungssitz und dem Sensorschaft ein zweiter Dichtring als zweite ringförmige Dichtung zum Sensorschaft eingespannt ist.

## Claims

1. Adapter for a potentiometric sensor with an axisymmetric sensor shaft which has a reference liquid opening (9; 19) in its lateral surface area, where the adapter comprises: an annular chamber body (1; 11) with an axisymmetric sensor opening to hold the sensor shaft (10; 20) in a given axial position with regard to the annular chamber body (1; 11), where the sensor opening has a first annular seal seat (2; 12) in a first axial section and a second annular seal seat (3; 13) in a second axial section, where a first and a second sealing ring can be clamped between the first seal seat and the sensor shaft and between the second seal seat and the sensor shaft, where the axial position of the reference liquid opening (9; 19) is between the first and second axial section - if the sensor shaft is held in the sensor opening as designated - in such a way that an annular chamber is formed between the first and second sealing ring and the lateral surface area of the sensor shaft (10; 20), where the annular chamber communicates with the reference liquid opening (9; 19), and the annular chamber body also has a channel (8; 18) which extends between the annular chamber and a reference supply opening, **characterized in that** the adapter also has a process connection body (7; 17) with a process connection opening which surrounds the sensor shaft (10; 20) and whose axis is flush with the axis of the sensor opening, where the axial position of the process connection body (7; 17) is fixed with regard to the annular chamber body (1; 11) and the process connection body is free to rotate with regard to the annular chamber body.

2. Adapter as per Claim 1, where the first seal seat comprises a first sealing surface for a sealing ring, where the sealing surface is adjacent to a first end section of the sensor opening and faces this end section.

3. Adapter as per Claim 2, where a thread is provided in the first end section of the sensor opening into which a complimentary thread - which is provided at a sensor head of the potentiometric sensor - can be screwed, where an annular face of the sensor head causes a sealing ring to be clamped against the first sealing surface either directly or via a first intermediate clamping ring.

4. Adapter as per one of the Claims 1-3, where the second sealing seat comprises a second sealing surface for a sealing ring, where said sealing surface is adjacent to a second end section of the sensor opening and faces this end section, where the second end section faces away from the first end section.

5. Adapter as per Claim 4, where a thread is provided in the second end section of the sensor opening into which a screw sleeve can be screwed in order to clamp a sealing ring against the second sealing surface either directly or via an intermediate second clamping ring.

6. Adapter as per one of the previous claims, where the lateral surface area of the sensor shaft (10; 20) also serves as a sealing surface for the clamped first and second sealing ring to ensure the annular chamber is completely sealed.

7. Adapter as per Claim 1, where the first and/or second sealing seat each comprises a circumferential annular groove in the sensor opening, which is shaped in such a way that a sealing ring is clamped between the sensor shaft and the annular groove such that the resulting pressure of the sealing ring effectuates a reliable seal.

8. Adapter as per one of the previous claims, where the process connection body comprises a sleeve that surrounds the sensor shaft, where the sleeve surrounds the annular chamber body at least in one axial section, or where the sleeve is surrounded by the annular chamber body in an axial section, and where the sleeve is secured with suitable locks against axial movement vis-à-vis the annular chamber body.

9. Adapter as per Claim 8, where the sleeve has a thread or a part of a bayonet lock on its lateral surface area or a flange on the face.

10. Adapter as per Claim 8 or 9, where a face of the sleeve or the annular chamber body facing towards a process opening acts as a clamping surface for a process seal.

11. Potentiometric sensor comprising an axisymmetric sensor shaft whose lateral surface area has a reference liquid opening and an adapter as per one of the Claims 1-10, where the axial position of the reference liquid opening is between the first and the second axial section of the adapter if the sensor shaft is held in the adapter as designated, and where a first sealing ring is clamped between the first sealing seat and the sensor shaft as the first annular seal to the sensor shaft, and a second sealing ring is clamped between the second sealing seat and the sensor shaft as a second annular seal to the sensor shaft.

## Revendications

1. Adaptateur pour un capteur potentiométrique avec une tige de capteur à symétrie axiale, qui présente dans sa surface latérale une ouverture de liquide de référence (9, 19), l'adaptateur comprenant : un corps de chambre annulaire (1, 11) avec une ouverture de capteur à symétrie axiale, destiné au logement de la tige de capteur (10, 20) dans une position axiale prédéfinie par rapport au corps de chambre annulaire (1, 11), l'ouverture de capteur présentant un premier siège d'étanchéité annulaire (2, 12) dans une première section axiale, et un deuxième siège d'étanchéité annulaire (3, 13) dans une deuxième section axiale, une première et une deuxième bague d'étanchéité pouvant être serrées entre le premier siège d'étanchéité et la tige de capteur et entre le deuxième siège d'étanchéité et la tige de capteur, la position axiale de l'ouverture de liquide de référence (9, 19) se situant entre la première et la deuxième section axiale, lorsque la tige de capteur est logée conformément aux prescriptions dans l'ouverture de capteur, de telle manière à former, entre la première et la deuxième bague d'étanchéité et la surface latérale de la tige de capteur (10, 20), une chambre annulaire, qui communique avec l'ouverture de liquide de référence (9, 19), et le corps de chambre annulaire présentant en outre un canal (8, 18), qui s'étend entre la chambre annulaire et une ouverture d'alimentation de référence, **caractérisé en ce que** l'adaptateur présente en outre un corps de raccord-process (7, 17) avec une ouverture de raccord-process, laquelle entoure la tige de capteur (10, 20), et dont l'axe est affleurant avec l'axe de l'ouverture de capteur, la position axiale du corps de raccord-process (7, 17) étant fixe par rapport au corps de chambre annulaire (1, 11), et le corps de raccord-process (7, 17) pouvant être tourné librement par rapport au corps de chambre annulaire.

2. Adaptateur selon la revendication 1, pour lequel le premier siège d'étanchéité comprend une première surface d'étanchéité pour une bague d'étanchéité, qui avoisine une première section finale de l'ouverture de capteur et se situe en face d'elle.

3. Adaptateur selon la revendication 2, pour lequel est prévu, dans la première section finale de l'ouverture de capteur, un filetage, dans lequel peut être vissé un filetage complémentaire, lequel est prévu sur une tête du capteur potentiométrique, une surface frontale annulaire de la tête de capteur assurant, directement ou par l'intermédiaire d'une première bague de serrage intermédiaire, le serrage d'une bague d'étanchéité contre la première surface d'étanchéité.

4. Adaptateur selon la revendication 1 à 3, pour lequel le deuxième siège d'étanchéité comprend une deuxième surface d'étanchéité pour une bague d'étanchéité, qui avoisine une deuxième section finale de l'ouverture de capteur et se situe en face d'elle, la deuxième section finale étant située à l'opposé de la première section finale.

5. Adaptateur selon la revendication 4, pour lequel est prévu dans la deuxième section finale de l'ouverture de capteur, un filetage, dans lequel peut être vissée une douille filetée, afin de serrer une bague d'étanchéité contre la deuxième surface d'étanchéité, directement ou au moyen d'une deuxième bague de serrage intermédiaire.

6. Adaptateur selon l'une des revendications précédentes, pour lequel la surface latérale de la tige de capteur (10, 20) sert également de surface d'étanchéité pour la première et la deuxième bague d'étanchéité serrée, afin de générer une étanchéité complète de la chambre annulaire.

7. Adaptateur selon la revendication 1, pour lequel le premier et/ou le deuxième siège d'étanchéité comprennent chacun une rainure annulaire périphérique, laquelle est dimensionnée de telle manière qu'une bague d'étanchéité entre la tige de capteur et la rainure annulaire est serrée de telle sorte que la pression superficielle de la bague d'étanchéité, en résultant, assure une étanchéité fiable.

8. Adaptateur selon l'une des revendications précédentes, pour lequel le corps de raccord-process comprend une douille entourant la tige de capteur, laquelle entoure au minimum le corps de chambre annulaire dans une section axiale, ou laquelle est entourée par le corps de chambre annulaire dans une section axiale, et laquelle est bloquée pour empêcher un décalage axial par rapport au corps de chambre annulaire à l'aide de moyens d'arrêt appropriés.

9. Adaptateur selon la revendication 8, pour lequel la douille présente sur sa surface latérale un filetage, ou porte une partie d'une fermeture à baïonnette ou comporte une bride sur sa partie frontale.

10. Adaptateur selon la revendication 8 ou 9, pour lequel une surface frontale, faisant face à l'ouverture de process, de la douille ou du corps de chambre annulaire sert de surface de serrage pour un joint de process.

11. Capteur potentiométrique, comprenant : une tige de capteur à symétrie axiale, qui présente dans sa surface latérale une ouverture de liquide de référence et un adaptateur selon l'une des revendications 1 à 10, la position axiale de l'ouverture de liquide de référence se situant entre la première et la deuxième section axiale de l'adaptateur, lorsque la tige de capteur est logée conformément aux prescriptions dans l'adaptateur, et une première bague d'étanchéité, sous la forme d'un premier joint d'étanchéité annulaire par rapport à la tige de capteur, étant serrée entre le premier siège d'étanchéité et la tige de capteur, et une deuxième bague d'étanchéité, sous la forme d'un deuxième joint d'étanchéité annulaire par rapport à la tige de capteur, étant serrée entre le deuxième siège d'étanchéité et la tige de capteur.
